# EUROPEAN PATENT SPECIFICATION

(11) **EP 2 361 802 B1**
(45) Date of publication and mention of the grant of the patent: **27.11.2013**
(21) Application number: 10425318.2
(22) Date of filing: 01.10.2010
(51) Int. Cl.: B60N 2/60

(54) **Seat cover for vehicles**
Sitzbezug für Fahrzeuge
Housse de siège pour véhicules

(30) Priority: 02.10.2009 IT MN20090021
(43) Date of publication of application: 31.08.2011
(73) Proprietor: Austo S.r.L., 46016 Viadana (MN) (IT)
(72) Inventor: Storti, Ernesto, 46016 Viadana (Mantova) (IT)
(74) Representative: Petazzi, Guido

(56) References cited:
- EP-A1- 2 090 199
- EP-A1- 2 189 331
- EP-A2- 2 008 866
- WO-A1-2007/000758
- DE-U1- 8 023 722
- DE-U1- 8 023 722
- GB-A- 896 090
- US-A- 4 885 200
- US-A1- 2008 143 951

## Description

This invention refers to a seat cover for vehicles particularly flexible and suitable that considerably reduces the number of models and variants to be produced.

As it is known, seat covers are used, in particular in vans and trucks, to protect the structure and original seat cover from wear, to vary the aesthetics of the seat and comfort as well as to offer the user a warmer or cooler contact with the seat according to the season.

Currently on the market there are as many seat cover models as there are seat configurations for every brand of truck or van, therefore there are about twenty different models. Furthermore, for each model there are often the driver's seat and passenger seat versions, thus increasing the range of models.

While the said seat covers currently available on the market do fulfil their task, several problems and drawbacks have emerged therefrom.

A first drawback derives from the fact that in order to immediately satisfy customers, resellers but also wholesalers have to stock a high number of seat covers to cover the entire range of models and variants, types of seats, left or right, vehicle brands and colours: this situation entails a large amount of space, a significant economic investment, with the risk of being able to sell just a few of the pieces and models thus remaining with a certain number of unsold seat covers.

Another drawback derives from the fact that the buyer has to order the seat cover giving the model of the vehicle and type of seat and therefore must wait a few days before receiving it as it is ordered and produced on order.

The situation described above means that the buyer cannot always have and change the seat cover when he wants or when it is necessary, because for example the buyer may just be driving by and will not have the time or occasion to stop at that reseller's again. It also often happens that to save time, or because it is necessary, the seat cover of another model is adapted with the result that the seat cover does not properly fit the seat and does not look good because it is creased and wrinkled. Finally, when a user decides to change the seat cover of his .vehicle he wishes to do so immediately without having to wait days, but above all the user wants to be able to see it and choose it.

For the reasons described above truck drivers often desist from purchasing a seat cover.

Furthermore, the applicant is aware of British patent GB 896,090, which illustrates a seat cover combining portions of textile material with portions of thermoplastic sheet materials. The fabric is present on the seat and the backrest and is joined to the thermoplastic material by heating the latter. At the points where the fabric and the plastic material overlap, the plastic material is visible as a decorative line. The seat cover is then secured to the seat via the bottom edge of the plastic material, which provides a strip which engages with a groove in the frame of the seat.

The said prior patent illustrates a seat cover that is shaped exactly like the seat on which it is placed and is absolutely not adaptable to nor usable for different seat models.

Moreover, the applicant is also aware of US patent US 4,885,200, which illustrates a protective cover for children's car seats which can be used on different models of children's car seats. This cover covers the front of the seat where the child sits and is only placed in position so that it is easy to remove for washing when it gets dirty.

In particular, the seat cover features a couple of cuts which start from the outside edges and create an access through which to insert the shoulder straps. These cuts have two possible positions for the straps. Moreover, the seat cover features a seat for the insertion of the front strap which secures the child. The seat cover illustrated in the patent does not completely cover the seat, it is only placed in position and is not bound to the seat structure. What is more, there are cuts featured which are used to adapt the fabric to the seat so as not to create folds that could be uncomfortable for the child when seated. The openings, slits, and cuts are made in the seat cover when it is manufactured.

The aim of the present invention is essentially to overcome the drawbacks of the commonly known technique by resolving the difficulties by means of a seat cover for vehicles which is more flexible, practical and that can be used for a considerable number of seats of different configurations and shapes. -

A further aim of this invention is to create a seat cover for vehicles that can significantly reduce the number of models to be produced.

A still further aim of this invention is to create a seat cover for vehicles that allows the reseller to immediately satisfy the customer and at the same time have an extremely limited number of models in stock.

A further but not final aim of the present invention is to create a seat cover for vehicles which is easy to manufacture and works well.

These aims and others besides, which will better emerge over the course of the present description, are essentially achieved by means of a seat cover for vehicles, as outlined in the claims below.

Further characteristics and advantages will better emerge in the detailed description of seat cover for vehicles according to this invention, provided in the form of a non-limiting example, with reference to the accompanying drawings, in which:
- figures 1A and 1B each show, schematically and from a perspective view a seat;
- figures 2A and 2B each show schematically a seat with the seat cover as per the present invention;
- figures 3A and 3B show schematically a detail of the seat cover concerned;
- figures 4A and 4B show schematically another detail of the seat cover;
- Figure 5 shows from a front view a detail of figure 2B;
- figure 6 shows the detail of figure 5 from a rear view;
- Figure 7 shows a different detail of the seat cover as per this invention;
- figures 8A and 8B each show another detail of the seat cover concerned.

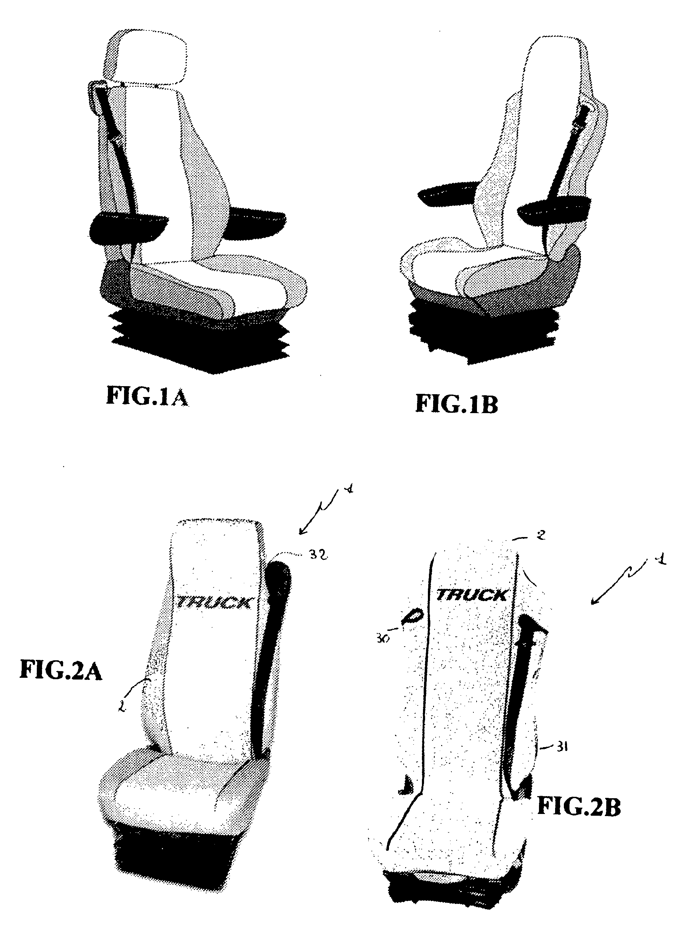

With reference to the figures, and in particular figure 2A, 1 denotes, as a whole, a seat cover for vehicles according to the present invention.

Seat cover 1 concerned is suitable for use as protection and cover of vehicle seats in particular for vans and trucks.

Seat cover 1 features a structure 2 with a configuration of an essentially well known type, i.e. designed to adapt and adhere to the outline of the vehicle seat to cover.

In particular, structure 2 is made of textile material endowed with a series of imprints 3 realised by welding in order to create a plurality of incisions, each with a predetermined configuration.

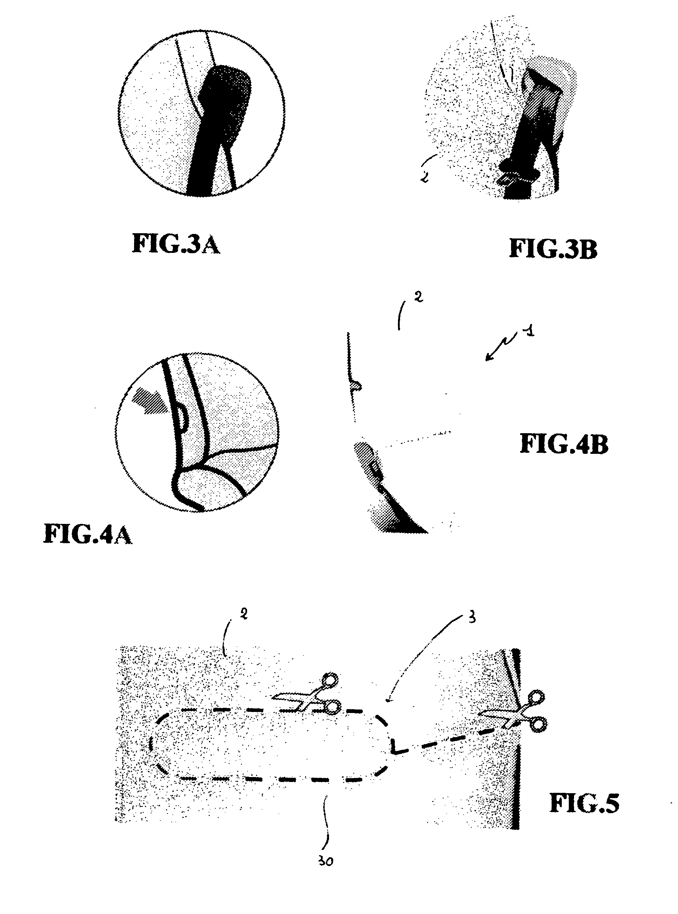

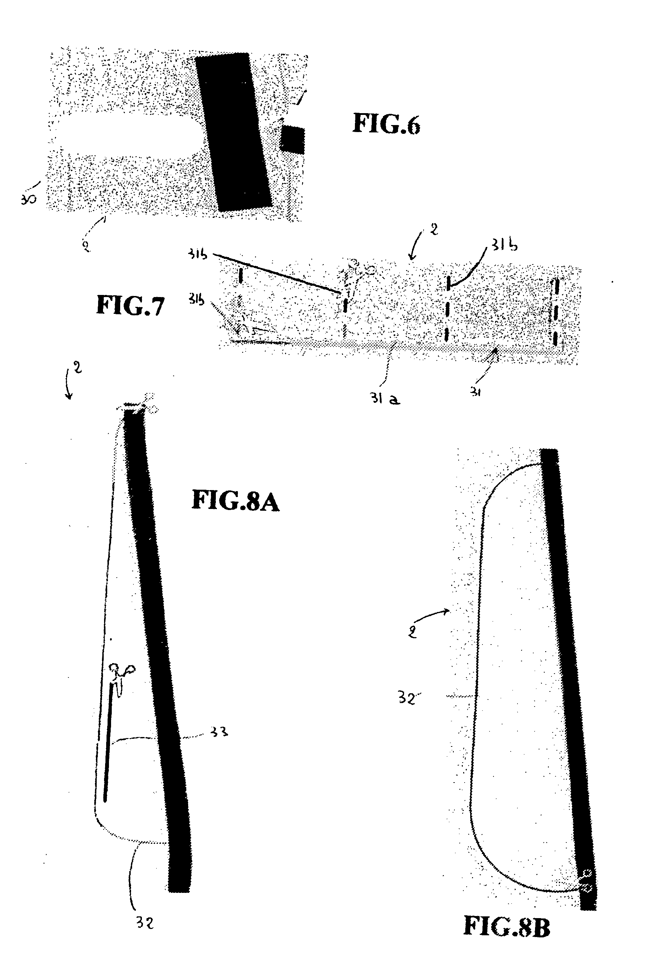

More in detail, the seat cover features a first imprint 30 located in position with the upper seat belt anchor with a conformation which is essentially elliptical and shown in figure 5, a second imprint 31 located in position with the armrest anchor with a rake-like configuration and shown in figure 7 and a third imprint 32 shown in figures 8A and 8B with a conformation which is essentially triangular or trapezoidal in position with the upper seat belt anchor when the seat belts are located outside the seatback as shown in figures 1A and 2A.

In addition a further imprint 33 is envisaged located parallel to a portion of the imprint 32 and envisaged to obtain a slot designed for the seat tilt lever to pass through.

According to the present invention the series of imprints 30, 31, 32 and 33 are realised by welding in order to create zones where the fabric can be easily cut by the user with scissors to create shaped openings for, respectively, the seat belt, right- and/or left-hand armrest and the seat tilt lever to pass through.

In addition to what has been described so far, the said first imprint 30 can take on other shapes in addition to the elliptical one mentioned above, such a circular, square or rectangular shape or any other outline which may be needed.

In the same way the conformation of the incision can vary also for the other imprints.

According to the present invention, which is defined by the technical features set forth in independent claim 1, the said seat cover features portions of adhesive material, in strips, which serve to clamp and secure the slot created after the fabric has been cut in position with the incision so as to stop for example the seat belt from slipping out of the slot obtained as shown in figure 6.

In particular, as shown in figure 7, for the seats with armrest, to allow the latter to pass through, the imprint 31 must be cut along the horizontal incision 31a and if necessary one or more vertical incisions 31b must be cut to create a seat to house the armrest pin. Furthermore, the outline of the imprint will be suitable for any armrest configuration and can be round, elliptical or duly shaped and configured.

Furthermore when the seat features a lateral seat belt the said seat cover must be cut along imprint 32 while to obtain the opening for the seat tilt lever it is necessary to cut along imprint 33.

The presence of the different imprints described above means the number of seat cover models and variants can be significantly limited as not many types of seats are currently used, for example on trucks, and the number of seat cover models required is high due to the different positions and types of seat belts and armrests and to the presence of the seat tilt lever.

The imprints make it possible to create the different openings and seats for seat belts, armrests and seat tilt levers starting from the present seat cover.

The series of imprints may be all present or only partially but they need not all be used. When the imprints are not used they can become decorative items as they do not alter the overall aesthetics of the seat cover, but rather they enrich it.

In addition to what has been illustrated so far, once the incisions have been cut they create an opening with neat and regular edges and the fabric along the cuts does not fray o produce threads or tear.

After the predominantly structural description above, the operation of the present invention will now be outlined.

When a user intends to change the seat cover of his vehicle all he has to do is purchase one from a reseller, which in turn does no longer have to order it made to measure and can keep a reduced amount of seat covers in stock that cover all the seat models and are immediately available for use.

Before covering his seat the user simply has to use a pair of scissors to cut the imprints of the incisions which correspond to the position of the seat belt, right- and/or left-hand armrest, when present, and the seat tilt lever. Once the openings are ready the user fits the seat cover over the seat until all parts adhere and pulls through the seat belts, armrest/s, etc...

Finally the user stops the seat cover from moving, for example from slipping out over the seat belt by positioning a portion of adhesive material that will close the opening created by the cut as shown in figure 6.

Thus the present invention achieves the aims set.

The present seat cover for vehicles is very flexible, practical and can be used for a significant number of seats of different configurations and shapes.

Furthermore, the seat cover makes it possible to significantly reduce the number of models to be produced down to just a few so the reseller can immediately satisfy the customer with a limited number of pieces in stock and with a significant reduction in investments.

Advantageously, according to this invention, with just very few models of seat covers it is possible to cover the entire range of seats currently used on trucks.

A further advantage that emerges from the seat cover derives from the fact that the user can immediately have the seat cover required and can choose it without having to wait after having ordered it as happens with the seat covers of the commonly known technique.

A further but not final advantage of the present invention is that it proves remarkable easy to use and to manufacture and works well.

Naturally, further modifications or variants may be applied to the present invention if thereby remaining within the scope of the invention as defined by the appended claims.

## Claims

1. A seat cover for vehicles of the type comprising a structure (2) made of a textile material with a configuration designed to adapt and adhere to the outline of a vehicle seat to cover, **characterised by** the fact that the said structure (2) is endowed with a series of imprints (30, 31, 32 and 33) to create a plurality of incisions which can be opened, each with a predetermined configuration wherein:
- a first imprint (30) is located in position with the upper seatbelt anchor,
- a second imprint (31) is located in position with the armrest anchor, and
- a third imprint (32) is envisaged in position with the upper seatbelt anchor when the seatbelts are located outside the seatback,
said imprints (30, 31 and 32) being obtained by welding in order to create zones where the fabric can be easily cut with scissors to create shaped openings for, respectively, the seat belt and the right- and/or left-hand armrest to pass through,
said seat cover comprising portions of adhesive material, in strips, which serve to clamp and secure the slot created after the fabric has been cut in position with the incision, so as to seal it.

2. A seat cover according to claim 1, **characterised by** the fact that the said cover features a further imprint (33) located parallel to a portion of the imprint (32) and envisaged to obtain a slot designed for the seat tilt lever to pass through, said imprint (33) being obtained by welding in order to create a zone where the fabric can be easily cut with scissors to create a shaped opening for the seat tilt lever to pass through.

3. A seat cover according to claim 1, **characterised by** the fact that the said first imprint (30) features a conformation which is essentially elliptical or circular or square or rectangular or any other outline which may be needed.

4. A seat cover according to claim 1, **characterised by** the fact that the said second imprint (31) features a rake-like configuration composed of a horizontal incision (31a) and at least one vertical incision (31b) so as to obtain a seat to house an armrest and its pin.

5. A seat cover according to claim 1, **characterised by** the fact that the said third imprint (32) features a conformation which is essentially triangular or trapezoidal.

6. A seat cover according to claim 1, **characterised by** the fact that the said second imprint (31) features a round or elliptical or any other configuration.

## Patentansprüche

1. Sitzbezug für Fahrzeuge des Typs der eine Struktur (2) aus Spinnstoff einschließt mit einer Konfiguration, die darauf vorbereitet ist, sich an die Form eines zu überziehenden Fahrzeugsitzes anzupassen und dort anzuliegen, **dadurch gekennzeichnet, dass** die erwähnte Struktur (2) mit einer Reihe von Abdrücken (30, 31, 32 und 33) ausgestattet ist zur Schaffung einer Vielfalt von Einprägungen, die jeweils eine vorherbestimmte Konfiguration haben, wobei:
- Sich ein erster Abdruck (30) in der Nähe der oberen Befestigung der Sicherheitsgurte des Sitzes befindet.
- Ein zweiter Abdruck (31) in der Nähe der Befestigung der Armlehne vorhanden ist und
- ein dritter Abdruck (32) in der Nähe der oberen Befestigung der Sicherheitsgurte vorgesehen ist, wenn sich diese außerhalb der Rückenlehne befinden,
da die erwähnten Einprägungen (30, 31 und 32) durch Schweißen erzielt wurden, so dass Bereiche geschaffen wurden, in denen das Gewebe auf bequeme Weise mit einer Schere geschnitten werden kann zur Anfertigung von profilierten Öffnungen, die dazu dienen den Sicherheitsgurt bzw. die rechte und/oder linke Armlehne durchzuziehen,
der erwähnte Sitzbezug, der Teile eines Klebematerials in Streifen enthält, die zum Befestigen und Blockieren der nach dem Schneiden des Gewebes in der Nähe der Einprägung geschaffenen Öse dienen, so dass diese geschlossen wird.

2. Sitzbezug nach Anspruch 1, **dadurch gekennzeichnet, dass** er über einen weiteren Abdruck (33) verfügt, der parallel zu einem Abschnitt des Abdrucks (32) steht und dafür vorgesehen ist, um eine Öse zu bilden, durch die der Kipphebel der Rückenlehne des Sitzes geführt werden kann, da dieser Abdruck (33) durch Schweißen erzielt wurde, so dass ein Bereich geschaffen wird, in dem das Gewebe auf bequeme Weise mit einer Schere geschnitten werden kann zur Anfertigung einer profilierten Öffnung, die dazu dient den Kipphebel der Rückenlehne des Sitzes durchzuführen.

3. Sitzbezug nach Anspruch 1, **dadurch gekennzeichnet, dass** der erwähnte Abdruck (30) im Wesentlichen eine ellipsenförmige, runde, viereckige, rechteckige Form und gleichwelche Form aufweist, die benötigt wird.

4. Sitzbezug nach Anspruch 1, **dadurch gekennzeichnet, dass** der erwähnte zweite Abdruck (31) eine harkenförmige Konfiguration aufweist, die aus einer waagerechten Einkerbung (31a) und mindestens aus einer senkrechten Einkerbung (31b) besteht, so dass ein Sitz zur Aufnahme der Armlehne und seines Bolzens geschaffen wird.

5. Sitzbezug nach Anspruch 1, **dadurch gekennzeichnet, dass** der erwähnte dritte Abdruck (32) im Wesentlichen eine dreieckige oder trapezförmige Form hat.

6. Sitzbezug nach Anspruch 1, **dadurch gekennzeichnet, dass** der erwähnte zweite Abdruck (31) eine runde, ellipsenförmige Konfiguration oder gleichwelche Form hat.

## Revendications

1. Couvre-siège pour véhicule du type comprenant une structure (2) en matière textile ayant une configuration prévue pour s'adapter et adhérer à la forme d'un siège du véhicule à recouvrir **caractérisé par le fait que** la dite structure (2) est fournie d'une série d'empreintes (30, 31, 32 et 33) pour créer plusieurs fentes ayant chacune une configuration prédéfinie où :
- une première empreinte (30) est placée à la hauteur de l'attache supérieure des ceintures de sécurité du siège,
- une deuxième empreinte (31) se trouve à la hauteur de l'attache de l'accoudoir, et
- une troisième empreinte (32) est prévue à la hauteur de l'attache supérieure des ceintures de sécurité lorsque celles-ci sont en dehors du dossier,
ces fentes (30, 31 et 32) ont été réalisées moyennant soudure de manière à créer des zones où le tissu peut être facilement coupé avec des ciseaux pour créer des ouvertures servant à faire passer respectivement la ceinture de sécurité et l'accoudoir droit et/ou gauche,
le dit couvre-siège comprend des parties de matériau autocollant en bandes qui servent à arrêter et bloquer la boutonnière qui s'est créée après avoir coupé le tissu à la hauteur de la fente de manière à la fermer.

2. Couvre-siège conforme à la revendication 1, **caractérisé par le fait qu'**il possède une empreinte supplémentaire (33) placée parallèlement à une partie de l'empreinte (32) et prévue pour obtenir une boutonnière pouvant faire passer le levier d'inclinaison du dossier du siège, la dite empreinte (33) a été réalisée moyennant soudure de manière à créer une zone où le tissu peut être facilement coupé avec des ciseaux pour créer une ouverture servant à faire passer le levier d'inclinaison du siège.

3. Couvre-siège conforme à la revendication 1, **caractérisé par le fait que** la dite première empreinte (30) est conformée de manière principalement elliptique, circulaire, carrée, rectangulaire, et toute autre forme pouvant être utile.

4. Couvre-siège conforme à la revendication 1, **caractérisé par le fait que** la dite deuxième empreinte (31) a une configuration en forme de râteau se composant d'une fente horizontale (31a) et au moins d'une autre verticale (31b) de manière à obtenir une fente pour accueillir un accoudoir et son pivot.

5. Couvre-siège conforme à la revendication 1, **caractérisé par le fait que** la dite troisième empreinte (32) a une configuration principalement triangulaire ou trapézoïdale.

6. Couvre-siège conforme à la revendication 1, **caractérisé par le fait que** la dite deuxième empreinte (31) a une configuration ronde elliptique ou toute autre conformation voulue.
